# EUROPÄISCHE PATENTSCHRIFT

(11) **EP 1 354 155 B1**
(45) Veröffentlichungstag und Bekanntmachung des Hinweises auf die Patenterteilung: **09.01.2008**
(21) Anmeldenummer: 02715443.4
(22) Anmeldetag: 17.01.2002
(51) Int. Cl.: F16J 15/06, F02F 11/00

(54) **METALLISCHE FLACHDICHTUNG UND VERFAHREN ZU DEREN HERSTELLUNG**
METALLIC FLAT SEAL AND METHOD FOR THE PRODUCTION THEREOF
JOINT PLAT METALLIQUE ET SON PROCEDE DE PRODUCTION

(30) Priorität: 19.01.2001 DE 10102288
(43) Veröffentlichungstag der Anmeldung: 22.10.2003
(73) Patentinhaber: REINZ-Dichtungs-GmbH, 89233 Neu-Ulm (DE)
(72) Erfinder: WAMPULA, Torsten, 89143 Blaubeuren (DE); LUDWIG, Josef, 89168 Niederstotzingen (DE); WEISS, Alfred, 89231 Neu-Ulm (DE); UNSELD, Günther, 89189 Neenstetten (DE); LASKE, Matthias, 89073 Ulm (DE); DILLENZ, Friedrich, 89134 Blaustein-Herrlingen (DE)
(74) Vertreter: Pfenning, Meinig & Partner GbR
(86) Internationale Anmeldenummer: PCT/EP2002/000427
(87) Internationale Veröffentlichungsnummer: WO 2002/057667

(56) Entgegenhaltungen:
- DE-A- 4 311 838
- US-A- 5 195 365

## Beschreibung

Die Erfindung betrifft eine metallische Flachdichtung mit mindestens einer Dichtungslage mit mindestens einer Durchgangsöffnung zur Abdichtung von zwei Bauteilen gegeneinander. Dabei ist ein Sensorelement so in das System integriert, daß es vor einer Verpressung geschützt ist.

Metallische Dichtsysteme finden vor allem im Automobilbereich als Zylinderkopfdichtungen Verwendung. Zylinderkopfdichtungen dichten dabei verschiedene Räume, wie etwa Brennräume, Kühl- und Schmiermitteldurchtritte, Schraubenbolzen sowie Durchgänge für Ventilsteuerteile gegeneinander ab. Die Anforderungen an diese Dichtsysteme werden dabei immer höher, wobei eine meßtechnische Datenaufnahme der charakteristischen Parameter der Dichtung wünschenswert erscheint. Hier bietet sich die Messung in direkter Nähe der entsprechenden Öffnungen an, um eine möglichst genaue Datenaufnahme zu realisieren. Aufgrund dieser Anforderungen an die Dimensionierung treten sensorische Messungen immer stärker in den Vordergrund (US-A-5195365).

So lehrt die DE 199 13 092 eine Zylinderkopfdichtung, an der eine Sensoreinrichtung zum Erfassen von Meßwerten angeordnet ist.

Nachteil des Standes der Technik ist allerdings, daß die Gefahr der Verpressung des Sensorelementes so groß ist, daß nur sehr robuste Sensoren verwendet werden können.

Aufgabe der vorliegenden Erfindung ist es daher, ein metallisches Dichtsystem bereit zu stellen, das ein vor Verpressung geschütztes Sensorelement enthält.

Diese Aufgabe wird durch die gattungsgemäße metallische Flachdichtung mit den Merkmalen des Anspruchs 1 und das gattungsgemäße Verfahren zur Herstellung mit den Merkmalen des Anspruchs 19 gelöst. Die weiteren Unteransprüche zeigen vorteilhafte Weiterbildungen auf. In den Ansprüchen 26 und 27 wird die Verwendung der Dichtsysteme beschrieben.

Erfindungsgemäß wird eine metallische Flachdichtung mit mindestens einer Dichtungslage mit mindestens einer Durchgangsöffnung bereitgestellt, wobei auf mindestens einer Oberfläche der Dichtungslage eine dazu in Bezug auf die Durchgangsöffnungen korrespondierende Sensorlage aufgebracht ist, die aus einer Verpressungsschutzlage mit mindestens einer Auslassung besteht. Die Verpressungsschützlage dient dabei als Schutz für das Sensorelement vor mechanisch bedingten Beschädigungen und besteht aus einem unverpressbaren Material, z.B. Stahl hoher Härte. In die Auslassung der Verpressungsschutzlage ist dabei das Sensorelement zumindest teilweise eingebaut.

In einer bevorzugten Ausführung ist die Sensorlage auf einer separaten Trägerlage aufgebracht. Dadurch kann die Aufbringung der Sensorlage unabhängig vom Fertigungsprozeß der Zylinderkopfdichtung erfolgen. Gleichzeitig kann die Trägerlage hinsichtlich einer optimalen Haftvermittlung zwischen Sensorlage und Dichtungslage gewählt werden.

Die Sensorlage kann dabei sowohl an der dem Zylinderkopf als auch dem Motorblock zugewandten Seite der Zylinderkopfdichtung angeordnet sein. Ebenso ist es möglich, daß an beiden Seiten jeweils eine Sensorlage aufgebracht ist. Denn so ist die Anordnung mehrerer Sensorelemente auf beiden Seiten des metallischen Dichtsystems möglich. Ebenso kann die Anordnung der Trägerlage sowohl auf der dem Zylinderkopf oder dem Motorblock zugewandten Seite des metallischen Dichtsystems sein.

In einer vorteilhaften Weiterbildung ist das Sensorelement zumindest teilweise in die Trägerlage eingebaut. Auch hierfür kommt z.B. eine Auslassung in Betracht, in die das Sensorelement eingesetzt werden kann. Ebenso kann die Trägerlage neben den Strukturen für das Sensorelement zusätzlich entsprechende Strukturen für Verbindungselemente zu einer Meßwertaufnahmeeinheit aufweisen. Hierzu zählen beispielsweise Leitungen oder Kontaktierungen. In gleicher Weise kann auch die Verpressungsschutzlage entsprechende Strukturen für die Verbindungselemente aufweisen. Der Vorteil solcher Strukturen ist, daß neben dem Sensorelement selbst auch die Verbindungselemente so vor Verpressung geschützt werden können.

In einer bevorzugten Ausführung ist auf der der Trägerlage abgewandten Stirnseite des Sensorelementes eine wärmeleitfähige Schicht aufgetragen. Die Wärmeleitfähigkeit dieser Schicht sollte dabei so hoch sein, daß eine nahezu fehlerfreie Temperaturmessung an dem entsprechenden Bauteil über diese wärmeleitende Schicht ermöglicht wird. Als wärmeleitfähige Schicht kann beispielsweise eine wärmeleitfähige Paste aufgetragen sein. Bevorzugt ist es zusätzlich, wenn die Trägerlage, die dem Motorblock und/oder dem Zylinderkopf zugewandt ist, eine hohe Wärmeleitfähigkeit besitzt.

In einer bevorzugten Ausführung ist auf der der Trägerlage abgewandten Seite des Sensorelementes eine vor mechanischen Beschädigungen schützende Schicht aufgetragen, wodurch der Schutz vor Verpressung, aber auch vor Abnutzung durch Reibung noch weiter verbessert wird.

In einer vorteilhaften Weiterbildung ist die Trägerlage aus Stahl, Aluminium und/oder anderen aluminiumhaltigen Materialien wie Keramiken oder Emaillen gefertigt. Dabei besitzt die Trägerlage bevorzugt eine Schichtdicke von weniger als 300 µm, besonders bevorzugt eine Schichtdicke von etwa 150 µm.

Die Verpressungsschutzlage, die bevorzugt aus Stahl hoher Härte, Aluminium und/oder anderen aluminiumhaltigen Materialien wie Keramiken oder Emaillen besteht, besitzt bevorzugt eine Schichtdicke von weniger als 300 µm, besonders bevorzugt etwa 200 µm. Zusätzlich ist es bevorzugt, wenn die Verpressungsschutzlage an den Stirnseiten der Ausnehmung elektrisch isoliert ist.

In einer vorteilhaften Weiterbildung kann die Verpressungsschutzlage zusätzlich eine Sicke und/oder einen Stopper aufweisen. Besonders bevorzugt ist dabei das Sensorelement in direkter Nähe der Sicke angeordnet, um einen zusätzlichen Schutz vor Verpressung zu ermöglichen. Ebenso ist es möglich, daß das Sensorelement selbst als Sicke und/oder Stopper ausgeprägt ist.

Bevorzugt wird das Sensorelement ausgewählt aus der Gruppe der piezoelektrischen, piezosresistiven, kapazitiven, magnetischen, elektromagnetischen, DMS-, Wirbelstrom-, Lichtwellenleiter-und Mikromechanik-Sensoren. Bevorzugt ist das Sensorelement als Temperatursensor ausgelegt. Die Verwendung eines Widerstandsenors als Sensorelement in der Flachdichtung ist ebenso bevorzugt. Besonders bevorzugt ist es als Sensorelement einen PTC-Temperaturfühler einzusetzen.

Erfindungsgemäß wird ein Verfahren zur Herstellung einer ein- oder mehrlagigen Metalldichtung mit einem Sensorelement vorgeschlagen, bei dem zunächst eine Verpressungsschutzlage auf die Metalldichtung aufgebracht wird, wobei die Verpressungsschutzlage mindestens eine Auslassung aufweist, in deren Bereich das Sensorelement durch kraftschlüssige Verbindung befestigt wird.

Als bevorzugte Auftragungstechnik wird dabei die Dickschichttechnologie eingesetzt, wie sie z.B. vom Siebdruck bekannt ist. Hierdurch können Schichtdicken des Sensorelementes im Bereich um 30 µm erzielt werden.

Ebenso kann das Sensorelement bevorzugt in der Dünnschichttechnologie aufgetragen werden, wodurch Schichtdicken des Sensorelementes um 1 µm realisiert werden können. Als bevorzugte Auftragungstechnik wird die PVD-Technik eingesetzt.

Als weitere Möglichkeiten zur kraftschlüssigen Verbindung des Sensorelementes in der Auslassung der Verpressungsschutzlage kommen aber auch klassische kraftschlüssige Verbindungen, wie z.B. Haftvermittlung, Lösen oder Arretieren in Betracht.

Für die,Verpressungsschutzlage und die Trägerlage wird als Ausgangsmaterial bevorzugt ein gehärteter Stahl, Aluminium und/oder anderen aluminiumhaltigen Materialien wie Keramiken oder Emaillen verwendet.

Verwendung finden die erfindungsgemäßen Flachdichtungen vor allem für Temperaturmessungen an Brennraumöffnungen. Ebenso ist aber auch die Verwendung für Kraft-, Weg-, Dehnungs-, Beschleunigungs-und/oder Druckmessungen an Brennraumöffnungen möglich.

Anhand der folgenden Figuren soll die erfindungsgemäße Flachdichtung anhand einzelner Beispiele erläutert werden, ohne den erfindungsgemäßen Gegenstand.dadurch auf diese Beispiele zu beschränken.
- Figur 1: zeigt eine erfindungsgemäße Flachdichtung im Querschnitt.
- Figuren 2 bis 8: zeigen verschiedene Auftragungsvarianten der Sensorlage.

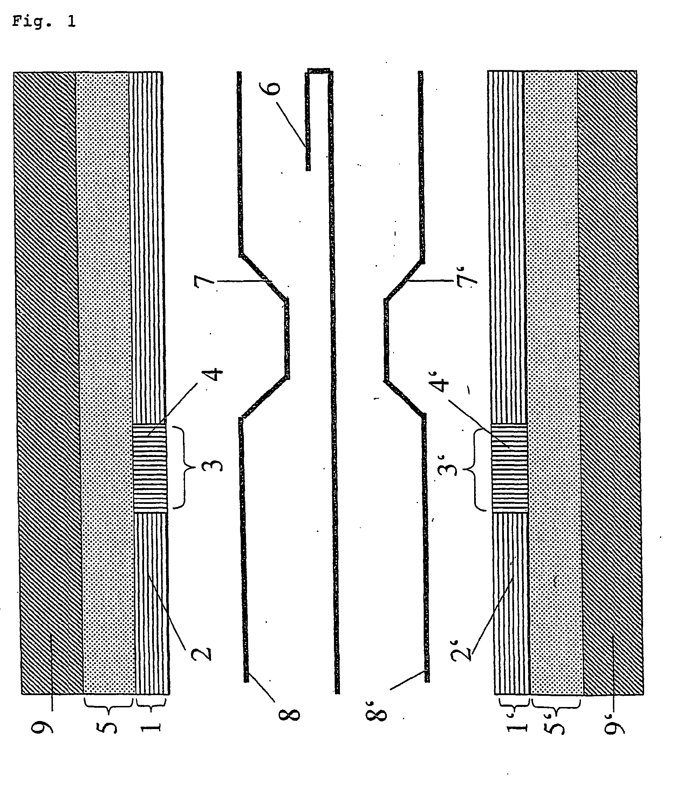

In Figur 1 ist eine Flachdichtung in Form einer Zylinderkopfdichtung mit einem Stopper 6 und zwei Sikken 7,7' abgebildet. Hieran schließen sich zu beiden Seiten jeweils eine Sensorlage 1,1', bestehend aus den Verpressungsschutzlagen 2,2' und den Sensorelement 4,4', die sich in einer Auslassung der Verpressungsschutzlage befinden, an. Die Snesorlage besitzt in diesem Beispiel eine Dicke von 270 µm. Auf der den Dichtungslagen 8,8' abgewandten Seiten befinden sich je eine Trägerlage 5,5', die auf der den Sensorlagen abgewandten Seiten in direktem Kontakt zum Zylinderkopf 9 bzw. zum Motorblock 10 stehen. Wie diese Zeichnung aufzeigt, ist es möglich, daß die Sensor-und Trägerlage sowohl auf der zum Zylinderkopf als auch auf der zum Motorblock zugewandten Seite angeordnet sind. In gleicher Weise ist es auch möglich,' daß nur auf einer Seite der Zylinderkopfdichtung eine Sensorlage aufgebracht ist.

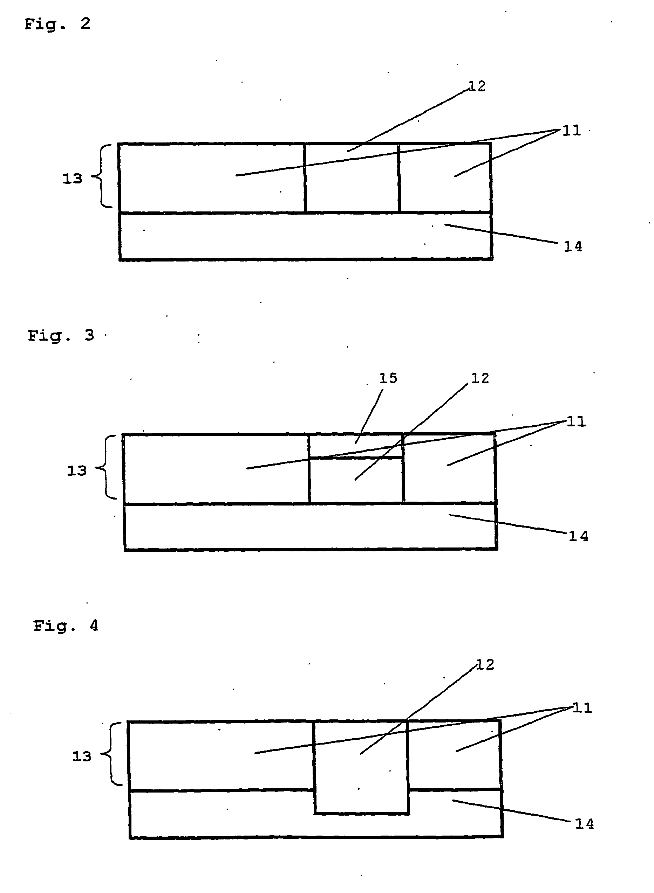

Figur 2 zeigt die Verpressungsschutzlage 11, in deren Auslassung das Sensorelement 12 eingelassen ist. Gleichzeitig ist diese Sensorlage 13 auf einer Trägerlage 14 aufgebracht.

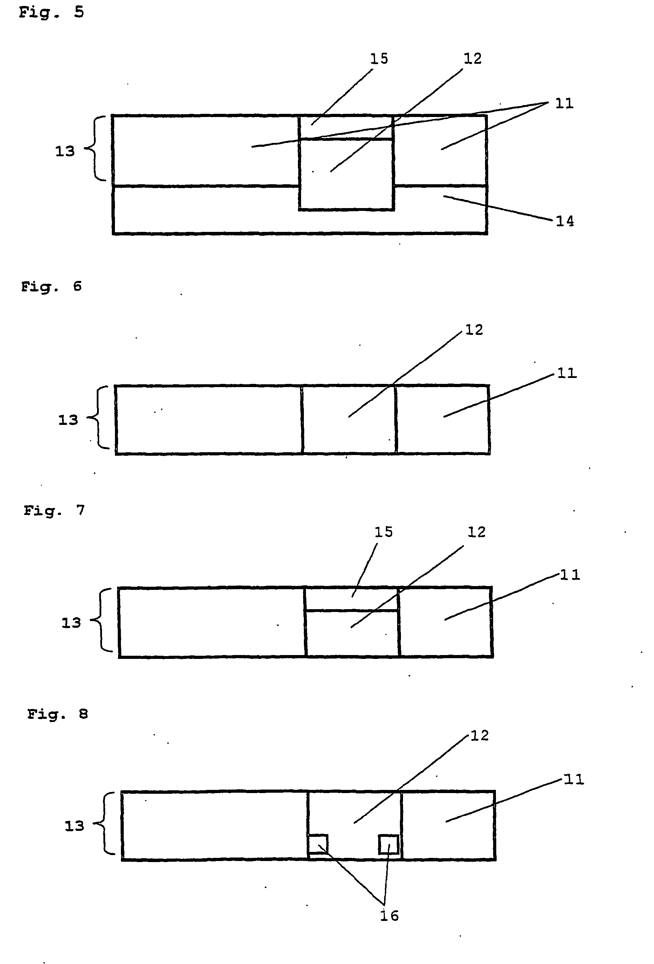

Figur 3 zeigt vergleichbar mit Figur 2 die Auftragung einer Sensorlage 13 auf einer Trägerlage 14, wobei das Sensorelement 12 die Ausnehmung nur teilweise ausfüllt, da auf der der Trägerlage 14 abgewandten Seite zusätzlich eine wärmeleitfähige Schicht und/oder eine vor mechanischen Beschädigungen schützende Schicht 15 aufgetragen ist.

In Figur 4 ist das Sensorelement 12 so ausgebildet, daß es zum einen vollständig die Ausnehmung der Verpressungsschutzlage 11 ausfüllt und gleichzeitig sich in die Trägerlage 14 erstreckt. Hierfür weist die Trägerlage 14 eine Strukturierung auf, in die das Sensorelement 12 eingesetzt wird. Dabei ist eine kraftschlüssige Verbindung zwischen Trägerlage 14 und Sensorelement 12 nicht zwangsläufig notwendig.

In Figur 5 erstreckt sich das Sensorelement 12 ebenso in die Trägerlage 14, wobei hier auf der der Trägerlage 14 abgewandten Seite des Sensorelementes zusätzlich eine wärmeleitfähige oder vor mechanischen Beschädigungen schützende Schicht 15 aufgetragen ist. Diese Schicht 15 kann z.B. in Form einer Paste.aufgetragen sein.

Figur 6 zeigt analog zu Figur 2 eine Sensorlage 13 bestehend aus einer Verpressungsschutzlage 11, in deren Ausnehmung ein Sensorelement 12 eingebracht ist. In diesem Fall wird jedoch keine Trägerlage eingesetzt, so daß die Sensorlage 13 direkt auf die Dichtungslage der Zylinderkopfdichtung aufgebracht wird.

Figur 7 zeigt eine Sensorlage 13, bestehend aus einer Verpressungsschutzlage 11, in deren Ausnehmung ein Sensorelement 12 befestigt ist, das zu einer Seite mit einer wärmeleitfähigen oder vor mechanischen Beschädigungen schützenden Schicht 15 abgedeckt ist.

Figur 8 zeigt eine Sensorlage 13, bestehend aus einer Verpressungsschutzlage 11, wobei hier das Sensorelement 12 derart in der Ausnehmung der Verpressungsschutzlage 10 befestigt ist, daß es über die Sensorsockel 16 das Sensorelement 3 arretiert wird.

## Patentansprüche

1. Metallische Flachdichtung in Form einer Zylinderkopfdichtung mit mindestens einer Dichtungslage (8,8') mit mindestens einer Durchgangsöffnung, bei der
auf mindestens einer Oberfläche der Dichtungslage eine dazu in Bezug auf die Durchgangsöffnüngen korrespondierende Sensorlage (1, 1') aufgebracht ist, die aus einer Verpressungsschutzlage (2, 2') und mindestens einer Auslassung (3, 3') besteht, in die zumindest teilweise ein Sensorelement (4, 4') eingebaut ist und **dadurch gekennzeichnet, dass** die Sensorlage (1,1') an der dem Zylinderkopf (9) und/oder dem Motorblock (10) zugewandten Seite der Zylinderkopfdichtung angeordnet ist derart, dass die Sensorlage (1,1') in eingebautem Zustand der Flachdichtung mit dem Zylinderkopf und/oder Motorblock in direktem Kontakt bringbar ist.

2. Flachdichtung nach Anspruch 1,
**dadurch gekennzeichnet, daß** die Sensorlage (1,1') auf einer separaten Trägerlage (5, 5') aufgebracht ist.

3. Flachdichtung nach mindestens einem der Ansprüche 1 oder 2,
**dadurch gekennzeichnet, dass** in der Trägerlage (5, 5') auf der dem Sensorelement (4,4') zuge - wandten Seite Strukturen ausgeprägt sind, in die sich das Sensorelement und/oder die verbindungselemente erstrecken.

4. Flachdichtung nach mindestens einem der Ansprüche 1 bis 3,
**dadurch gekennzeichnet, dass** auf der der Trägerlage (5,5') abgewandten Seite des Sensorelementes (4,4') eine wärmeleitende Schicht aufgetragen ist.

5. Flachdichtung nach mindestens einem der Ansprüche 1 bis 4,
**dadurch gekennzeichnet, daß** auf der der Trägerlage (5,5') abgewandten Seite des Sensorelementes (4,4') eine vor mechanischen Beschädigungen schützende Schicht aufgetragen ist.

6. Flachdichtung nach mindestens einem der Ansprüche 1 bis 5,
**dadurch gekennzeichnet, dass** die Trägerlage (5,5') aus Stahl, Aluminium und/oder anderen aluminiumhaltigen Materialien wie Keramiken oder Emaillen besteht.

7. Flachdichtung nach mindestens einem der Ansprüche 1 bis 6,
**dadurch gekennzeichnet, dass** die.Trägerlage (5,5') eine Schichtdicke ≤ 300 µm, bevorzugt ca. 150 µm besitzt.

8. Flachdichtung nach mindestens einem der Ansprüche 1 bis 7
**dadurch gekennzeichnet, dass** die Verpressungsschutzlage (2, 2') eine Schichtdicke ≤ 300 µm, bevorzugt ca. 200 µm besitzt.

9. Flachdichtung nach mindestens einem der Ansprüche 1 bis 8,
**dadurch gekennzeichnet, dass** die Verpressungsschutzlage (2,2') aus Stahl, Aluminium und/oder anderen aluminiumhaltigen Materialien wie Keramiken oder Emaillen besteht.

10. Flachdichtung nach mindestens einem der Ansprüche 1 bis 9,
**dadurch gekennzeichnet, dass** die Verpressungsschutzlage (2,2') an den Stirnseiten der Ausnehmung elektrisch isoliert ist.

11. Flachdichtung nach mindestens einem der Ansprüche 1 bis 10,
**dadurch gekennzeichnet, dass** die Verpressungsschutzlage (2,2') zusätzlich eine Sicke und/oder einen Stopper aufweist.

12. Flachdichtung nach Anspruch 11,
**dadurch gekennzeichnet, dass** das Sensorelement (4,4') neben der Sicke angeordnet ist.

13. Flachdichtung nach mindestens einem der Ansprüche 1 bis 12,
**dadurch gekennzeichnet, dass** das Sensorelement (4, 4') ausgewählt ist aus der Gruppe der piezoelektrischen, piezoresistiven, kapazitiven, magnetischen, elektromagnetischen, DMS-, Wirbelstrom-, Lichtwellenleiter- und Mikromechanik-Sensoren.

14. Flachdichtung nach mindestens einem der Ansprüche 1 bis 13,
**dadurch gekennzeichnet, dass** das Sensorelement (4,4') ein Dickschichtsensor ist.

15. Flachdichtung nach mindestens einem der Ansprüche 1 bis 13.
**dadurch gekennzeichnet, dass** das Sensorelement (4,4') ein Dünnschichtsensor ist.

16. Flachdichtung nach mindestens einem der Ansprüche 1 bis 15,
**dadurch gekennzeichnet, dass** das Sensorelement (4,4') ein Temperatursensor ist.

17. Flachdichtung nach Anspruch 16,
**dadurch gekennzeichnet, dass** das Sensorelement ein Widerstandssensor ist.

18. Flachdichtung nach Anspruch 17,
**dadurch gekennzeichnet, dass** das Sensorelement ein PTC-Temperaturfühler ist.

19. Verfahren zur Herstellung einer ein- oder mehrlagigen Zylinderkopfdichtung mit einem Sensorelement
**dadurch gekennzeichnet , dass**
eine Verpressungsschutzlage (2, 2') auf der dem Zylinderkopf (9) und/oder dem Motorblock (10) Zugewandten Seite einer Metalldichtung aufgebracht wird, wobei die Verpressungsschutzlage mindestens eine Auslassung (3, 3') aufweist, in deren Bereich das Sensorelement (4,4') durch kraftschlüssige Verbindung befestigt wird.

20. Verfahren nach Anspruch 19,
**dadurch gekennzeichnet, dass** die kraftschlüssige Verbindung durch dickschichttechnologische Auftragung, wie z.B. Siebdruck, erfolgt.

21. Verfahren nach Anspruch 19,
**dadurch gekennzeichnet, dass** die kraftschlüssige Verbindung durch dünnschichttechnologische Auftragung erfolgt.

22. Verfahren nach Anspruch 21,
**dadurch gekennzeichnet, dass** die kraftschlüssige Verbindung durch PVD-Technik erfolgt.

23. Verfahren nach Anspruch 19,
**dadurch gekennzeichnet, dass** die kraftschlüssige Verbindung durch Haftvermittlung, Löten und/oder Arretieren erfolgt.

24. Verfahren nach mindestens einem der Ansprüche 19 bis 23,
**dadurch gekennzeichnet, dass** eine Verpressungsschutzlage (2,2') aus Stahl, Aluminium und/oder anderen aluminiumhaltigen Materialien wie Keramiken oder Emaillen verwendet wird.

25. Verfahren nach mindestens einem der Ansprüche 19 bis 24,
**dadurch gekennzeichnet, dass** die Trägerlage (5,5') aus Stahl, Aluminium und/oder anderen aluminiumhaltigen Materialien wie Keramiken oder Emaillen aufgetragen wird.

26. Verwendung der Flachdichtung nach mindestens einem der Ansprüche 1 bis 18 für Temperaturmessungen an Brennraumöffnungen.

27. Verwendung der Flachdichtung nach mindestens einem der Ansprüche 1 bis 18 für Kraft-, Weg-, Dehnungs-, Beschleunigungs- und/oder Druckmessungen an Brennraumöffnungen.

## Claims

1. Metallic flat gasket in the form of a cylinder head gasket with at least one sealing layer (8,8') with at least one port, for which on at least one surface of the sealing layer, a sensor layer (1,1') corresponding to it with respect to the ports is arranged, which consists of a compression protection layer (2,2') and at least one break (3,3'), in which a sensor element (4,4') is at least partially installed, and
**characterized in**
**that** the sensor layer (1,1') is arranged on the side of the cylinder head gasket facing the cylinder head (9) and/or the engine block (10) in such a manner that the sensor layer (1,1') in an installed state of the flat gasket is able to be brought into direct contact with the cylinder head and/or engine block.

2. Flat gasket according to Claim 1, **characterized in that** the sensor layer (1,1') is arranged on a separate carrier layer (5,5').

3. Flat gasket according to at least one of Claims 1 or 2, **characterized in that** structures are stamped in the carrier layer (5,5') on the side facing the sensor element (4,4'), with the sensor element and/or connection elements extending into these structures.

4. Flat gasket according to at least one of Claims 1 to 3, **characterized in that** a heat-conductive layer is arranged on the side of the sensor element (4,4') facing away from the carrier layer (5,5').

5. Flat gasket according to at least one of Claims 1 to 4, **characterized in that** a layer that protects against mechanical damage is arranged on the side of the sensor element (4,4') facing away from the carrier layer (5,5').

6. Flat gasket according to at least one of Claims 1 to 5, **characterized in that** the carrier layer (5,5') consists of steel, aluminium, and/or other aluminium-containing materials, such as ceramics or enamels.

7. Flat gasket according to at least one of Claims 1 to 6, **characterized in that** the carrier layer (5,5') has a layer thickness ≤ 300 µm, preferably ca. 150 µm.

8. Flat gasket according to at least one of Claims 1 to 7, **characterized in that** the compression protection layer (2,2') has a layer thickness ≤ 300 µm, preferably ca. 200 µm.

9. Flat gasket according to at least one of Claims 1 to 8, **characterized in that** the compression protection layer (2,2`) consists of steel, aluminium, and/or other aluminium-containing materials, such as ceramics or enamels.

10. Flat gasket according to at least one of Claims 1 to 9, **characterized in that** the compression protection layer (2,2') is electrically insulated at the end sides of the recess.

11. Flat gasket according to at least one of Claims 1 to 10, **characterized in that** the compression protection layer (2,2') additionally has a bead and/or a stopper.

12. Flat gasket according to Claim 11, **characterized in that** the sensor element (4,4') is arranged next to the bead.

13. Flat gasket according to at least one of Claims 1 to 12, **characterized in that** the sensor element (4,4') is selected from the group of piezoelectric, piezoresistive, capacitive, magnetic, electromagnetic, DMS-, eddy current-, optical fiber- and micromechanical sensors.

14. Flat gasket according to at least one of Claims 1 to 13, **characterized in that** the sensor element (4,4') is a thick-film sensor.

15. Flat gasket according to at least one of Claims 1 to 13, **characterized in that** the sensor element (4,4') is a thin-film sensor.

16. Flat gasket according to at least one of Claims 1 to 15, **characterized in that** the sensor element (4,4`) is a temperature sensor.

17. Flat gasket according to Claim 16, **characterized in that** the sensor element is a resistance sensor.

18. Flat gasket according to Claim 17, **characterized in that** the sensor element is a PTC temperature probe.

19. Method for producing a single layer or multi-layer cylinder head gasket with a sensor element, **characterized in that** a compression protection layer (2,2') is arranged on the side of a metal gasket facing towards the cylinder head (9) and/or the engine block (10), with the compression protection layer having at least one break (3,3'), in whose region the sensor element (4,4') is attached by a frictional connection.

20. Method according to Claim 19, **characterized in that** the frictional connection is realized through a thick-film deposition technique, such as, e.g., screen printing.

21. Method according to Claim 19, **characterized in that** the frictional connection is realized through a thin-film deposition technique.

22. Method according to Claim 21, **characterized in that** the frictional connection is realized through PVD technique.

23. Method according to Claim 19, **characterized in that** the frictional connection is realized through adhesive bonds, soldering, and/or locking.

24. Method according to at least one of Claims 19 to 23, **characterized in that** a compression protection layer (2,2') made from steel, aluminium, and/or other aluminium-containing materials, such as ceramics or enamels, is used.

25. Method according to at least one of Claims 19 to 24, **characterized in that** the carrier layer (5,5') made from steel, aluminum, and/or other aluminum-containing materials, such as ceramics or enamels, is deposited.

26. Use of the flat gasket according to at least one of Claims 1 to 18 for temperature measurements at combustion chamber openings.

27. Use of the flat gasket according to at least one of Claims 1 to 18 for force-, path-, expansion-, acceleration- and/or pressure measurements at combustion chamber openings.

## Revendications

1. Joint plat métallique se présentant sous la forme d'un joint de culasse et comprenant au moins une couche d'étanchéité (8, 8') avec au moins une ouverture de passage, dans lequel sur au moins une surface de la couche d'étanchéité est placée une couche de capteur (1, 1') correspondant à cet effet par rapport aux ouvertures de passage, laquelle comprend une couche de protection en compression (2, 2') et au moins une décharge (3, 3'), dans laquelle est monté au moins en partie un élément capteur (4, 4'), et **caractérisé en ce que** la couche de capteur (1, 1') est disposée sur le côté, tourné vers la culasse (9) et/ou le bloc moteur (10), du joint de culasse, de telle sorte que la couche de capteur (1, 1') peut être amenée en contact direct avec la culasse et/ou le bloc moteur lorsque le joint plat est monté.

2. Joint plat selon la revendication 1,
**caractérisé en ce que** la couche de capteur (1, 1') est placée sur une couche support (5, 5') séparée.

3. Joint plat selon au moins l'une quelconque des revendications 1 ou 2, **caractérisé en ce que** dans la couche support (5, 5') sont incrustées des structures sur le côté tourné vers l'élément capteur (4, 4'), dans lesquelles s'étend l'élément capteur et/ou les éléments de liaison.

4. Joint plat selon au moins l'une quelconque des revendications 1 à 3, **caractérisé en ce qu'**une couche thermoconductrice est appliquée sur le côté, opposé à la couche support (5, 5'), de l'élément capteur (4, 4').

5. Joint plat selon au moins l'une quelconque des revendications 1 à 4, **caractérisé en ce qu'**une couche protégeant des détériorations mécaniques est appliquée sur le côté, opposé à la couche support (5, 5'), de l'élément capteur (4, 4').

6. Joint plat selon au moins l'une quelconque des revendications 1 à 5, **caractérisé en ce que** la couche support (5, 5') est en acier, en aluminium et/ou en d'autres matériaux à base d'aluminium comme des céramiques ou des émaux.

7. Joint plat selon au moins l'une quelconque des revendications 1 à 6, **caractérisé en ce que** la couche support (5, 5') présente une épaisseur de couche inférieure ou égale à 300 µm, de préférence égale environ à 150 µm.

8. Joint plat selon au moins l'une quelconque des revendications 1 à 7, **caractérisé en ce que** la couche de protection de compression (2, 2') présente une épaisseur de couche inférieure ou égale à 300µm, de préférence égale environ à 200 µm.

9. Joint plat selon au moins l'une quelconque des revendications 1 à 8, **caractérisé en ce que** la couche de protection de compression (2, 2') est en acier, en aluminium et/ou en d'autres matériaux à base d'aluminium comme des céramiques ou des émaux.

10. Joint plat selon au moins l'une quelconque des revendications 1 à 9, **caractérisé en ce que** la couche de protection en compression (2, 2') est électriquement isolée sur les côtés avant de l'évidement.

11. Joint plat selon au moins l'une quelconque des revendications 1 à 10, **caractérisé en ce que** la couche de protection de compression (2, 2') présente en outre une moulure et/ou une butée.

12. Joint plat selon la revendication 11, **caractérisé en ce que** l'élément capteur (4, 4') est disposé à côté de la moulure.

13. Joint plat selon au moins l'une quelconque des revendications 1 à 12, **caractérisé en ce que** l'élément capteur (4, 4') est choisi dans le groupe des capteurs à jauge de contrainte, des capteurs à courant de Foucault, des capteurs à fibres optiques et des capteurs à micromécanisme piézo-électriques, piézorésistifs, capacitifs, magnétiques, électromagnétiques.

14. Joint plat selon au moins l'une quelconque des revendications 1 à 13, **caractérisé en ce que** l'élément capteur (4, 4') est un capteur à couche épaisse.

15. Joint plat selon au moins l'une quelconque des revendications 1 à 13,
**caractérisé en ce que** l'élément capteur (4, 4') est un capteur à couche mince.

16. Joint plat selon au moins l'une quelconque des revendications 1 à 15,
**caractérisé en ce que** l'élément capteur (4, 4') est un capteur de température.

17. Joint plat selon la revendication 16,
**caractérisé en ce que** l'élément capteur est un capteur à résistance.

18. Joint plat selon la revendication 17,
**caractérisé en ce que** l'élément capteur est une sonde de température à CTP.

19. Procédé pour la fabrication d'un joint de culasse monocouche ou multicouches comprenant un élément capteur,
**caractérisé en ce qu'**une couche de protection en compression (2, 2') est placée sur le côté, tourné vers la culasse (9) et/ou le bloc moteur (10), d'un joint métallique, la couche de protection de compression présentant au moins une décharge (3, 3'), dans la zone de laquelle l'élément capteur (4, 4') est fixé par une liaison par adhérence.

20. Procédé selon la revendication 19,
**caractérisé en ce que** la liaison par adhérence est réalisée par une application technologique à couche épaisse, comme par exemple la sérigraphie.

21. Procédé selon la revendication 19,
**caractérisé en ce que** la liaison par adhérence est réalisée par une application technologique à couche mince.

22. Procédé selon la revendication 21,
**caractérisé en ce que** la liaison par adhérence est réalisée par la technique PVD.

23. Procédé selon la revendication 19,
**caractérisé en ce que** la liaison par adhérence est réalisée par couche d'accrochage, brasage et/ou arrêt.

24. Procédé selon au moins l'une quelconque des revendications 19 à 23,
**caractérisé en ce qu'**une couche de protection en compression (2, 2') en acier, en aluminium et/ou en d'autres matériaux à base d'aluminium comme des céramiques ou des émaux est utilisée.

25. Procédé selon au moins l'une quelconque des revendications 19 à 24,
**caractérisé en ce que** la couche support (5, 5') en acier, en aluminium et/ou en d'autres matériaux à base d'aluminium comme des céramiques ou des émaux est appliquée.

26. Utilisation du joint plat selon au moins l'une quelconque des revendications 1 à 18 pour des mesures de température sur des ouvertures d'espace de combustion.

27. Utilisation du joint plat selon au moins l'une quelconque des revendications 1 à 18 pour des ouvertures de force, de course, d'allongement, d'accélération et/ou de pression sur des ouvertures d'espace de combustion.
